# EUROPEAN PATENT SPECIFICATION

(11) **EP 3 162 507 B1**
(45) Date of publication and mention of the grant of the patent: **11.09.2019**
(21) Application number: 16197794.7
(22) Date of filing: 19.10.2015
(51) Int. Cl.: B25B 23/10, B25B 23/12, B23P 19/06

(54) **MAGNETIC LEVITATION SCREW-CLAMPING JAW FOR AUTOMATIC SCREWDRIVERS**
MAGNETSCHWEBESCHRAUBENKLEMMBACKE FÜR AUTOMATISCHE SCHRAUBENDREHER
MÂCHOIRE DE SERRAGE DE VIS À LÉVITATION MAGNÉTIQUE POUR TOURNEVIS AUTOMATIQUE

(43) Date of publication of application: 03.05.2017
(62) Divisional of application: 15190407.5
(73) Proprietor: Mijy-Land Industrial Co., Ltd., Taipei Shian (TW)
(72) Inventor: HSU, Hsiu-Lin, LW Jou City (TW)
(74) Representative: Hellmich, Wolfgang

(56) References cited:
- WO-A1-2011/057808
- US-A1- 2006 075 856
- US-A1- 2011 174 859
- US-A1- 2012 240 372

## Description

The present invention relates generally to screw-locking technology used in robots (or robotic arms), and more particularly to a magnetic levitation clamping jaw for automatic screwdrivers which is more convenient, more accurate and more effective.

Nowadays, automatic screwdrivers are commonly used in robots or robotic arms for screw-locking operations. In an automatic screw-locking operation, the screwdriver bit on the front end of the automatic screwdriver is aligned to the screw clamped from the screw aligner (or screw storage trough) on the robot or robotic arm and then the screw is locked and fixed.

To cater to various types of operation, manufacturers have constantly developed various products to meet specific needs; for example, TWM343563U "screw supplying device" disclosed a screw supplying device to combine with an automatic screwdriver, which comprises a screw supply trough and a swing arm. Through magnetism, the swing arm absorbs a screw supplied one by one by the screw supply trough, swings and aligns to the position right below the screwdriver bit of the automatic screwdriver; when the automatic screwdriver presses from below, the screwdriver bit and the screw will be combined for locking.

For a second example, TW187918B "an improved automatic screwdriver head structure" disclosed a sleeve head structure to combine with an automatic screwdriver supporting head, which comprises a sleeve head shaft, an elastic component, and a sleeve. It main feature is arrangement of a sleeve sheathed on the front bolt end of the detachable sleeve head shaft, and an elastic component fixed between the sleeve and the sleeve head shaft; by using the inner diameter of the sleeve to trap and fix the nut of the screw to be picked up, and turning the bolt head to contact and lay into the turning slot on the nut, the screw can be vertically clamped at once, accurately and stably.

US 2006/0075856 A1 discloses a device that is used to releasably hold fasteners in place at the ends of driving tools.

US 2011/0174859 A1 discloses a fastener electric hammer which drives nails or other fasteners to enter into an object by a force provided by a striking device.

US 2012/0240372 A1 discloses an extraction device having an automated actuation collar that is configured to open and close grasping arms to remove a fastener upon the actuation of a push button.

WO 2011/057808 A1 discloses a device for guiding screws which makes it easier to screw in screws.

For the above screw-clamping methods using air-blowing, air suction or elasticity, operators generally adopt middle or low torsion for the operating standards of automatic tools. The maximum torsion is rarely used as the maximum allowance, because using the maximum torsion will reduce the lifecycle of the automatic tools. Hence, such designs can not meet the condition of actual applications. Actual allowance may often be larger than the reference allowance set out in the contents of descriptions. Therefore, occasionally, when locking screws on airplanes, automobiles or other products, such situations as screw slippage or loose locking may occur, which may consequently leading to accidents; moreover, such chucks used to clamp screws are usually over-sized, and due to the problem of the chuck size, the convenience of screw-locking operation is often affected by the limited space.

In addition, the existing modules and peripheral devices commonly used in screw-locking operations by robots and automatic screwdrivers include: robot, coupling shaft (device), tool, external control tube, screw buffer mechanism, screw aligner (to pick up the screw), screw fixing mechanism (to clamp the screw) etc. The structural design of such existing robots and automatic screwdrivers can only be applied in traditional automatic equipment of three axes or less. Besides, in the past, there were no robot-dedicated pneumatic screwdrivers. Hence, before the screw-locking operation, at least 7 devices mentioned above shall be integrated to automatically complete the screw-locking action. Because the overall equipment uses too many modules, the manufacturing cost is greatly increased.

Secondly, in case of different sizes of screws to be locked, it is necessary to use screw fixers of matching sizes. However, as there are many different specifications of screws, if it is necessary to change a matching screw feeder every time when changing to a different screw size, the cost will be very high.

Furthermore, for general productions and precise productions, either when locking big screws (6mm or more) of large torsions or when locking small screws (5mm or less) of small torsions, the integrated operations will surely cause large allowances, particularly in the case of locking screws of 1mm or less in precise 3C productions. Such productions still rely on human labor, and due to the high cost of labor, massive production is not feasible.

The main objective of the present invention is to provide a magnetic levitation screw-clamping jaw for automatic screwdrivers used in assembly operations requiring high accuracy, and to further develop low-cost peripheral (locking) modules for automatic screwdrivers specifically used in robots. Thus, the production cost of peripheral equipment for locking screws can be reduced, and robots can easily, quickly and conveniently complete continuous and automatic screw-locking operations. This will greatly reduce production costs.

The second objective of the present invention is to provide a magnetic levitation screw-clamping jaw for automatic screwdrivers, which is capable of clamping operations through magnets pushed by a pneumatic controller or dual functions of magnetic absorption and clamping controlled by a pneumatic controller. The invention provides a sufficient range of screw diameters for clamping, so that it can clamp screws of various sizes without the need to change the clamping tool. Hence, it provides great convenience in practical applications; meanwhile, as the clamping operation is fulfilled through interaction of pneumatic control and magnetic absorption, the appearance of the screws will not be damaged during the clamping operations. Also, with a special design of the appearance and size of the chuck, the invention can be effectively applied even in small spaces.

When an automatic screwdriver is combined with a robotic arm for screw-locking operations, the magnetic levitation clamping jaw configured on the front end of the screwdriver bit of the automatic screwdriver can enable the robotic arm to smoothly clamp the screw, and immediately conduct the screw-locking operation after clamping the screw. Thus, continuous screw clamping and locking operations can be realized, and consequently, the efficiency of production requiring accurate screw-locking operations can be greatly enhanced.

The present invention adopts a technical solution that includes: configuration of a magnetic levitation clamping jaw on the front end of the screwdriver bit of an automatic screwdriver, the construction of the magnetic levitation clamping jaw at least comprising: a first magnet, configured on the periphery of the screwdriver bit, which will have synchronous displacement when the outer shell is pressed down to provide a magnetic repulsion force, and be reset when the outer shell is released; a second magnet, configured between the first magnet and the screwdriver bit without contacting each other, which will be pushed closer to the screwdriver bit along with the displacement of the first magnet under the repulsion force as like poles repel, and be reset when the screwdriver bit has locked the screw; and a chuck, bonded with the second magnet to have a magnetic attraction force, and which will form a tightened or released condition along with the displacement of the second magnet, so as to magnetically clamp and release the screw.

Said second magnet and the chuck can be an integrated structure.

The present invention specially designed a module dedicated to robots (or robotic arms), which, through pneumatic and electric control systems, during the screw-locking operation, signals can be transmitted to the host of the robot for control, and the systems can be connected to a central host computer for data storage. Transmission of the signals is stable, and the quality can be maintained at a high level. Other benefits include:
1. The number of dedicated peripheral modules for an automatic screwdriver used in a robot can be reduced from originally at least 7 to only 3, so that the robot can easily complete the screw-locking operation, and the cost can be dramatically reduced by more than 3 times.
2. The magnetic levitation clamping jaw provides a wide range of screw head diameters for clamping, avoiding the conventional troubles to change the chuck structure and operation for different screw specifications. Meanwhile, it can avoid damage of the appearance of the screw during the clamping operation.
   FIG. 1 is a structural view of a magnetic levitation clamping jaw;
   FIG. 2 is a working view of a magnetic levitation clamping jaw;

The present invention provides a magnetic levitation clamping jaw for automatic screwdrivers, mainly features a configuration of a magnetic levitation clamping jaw 30 on the front end of the screwdriver bit 10 of an automatic screwdriver 1.

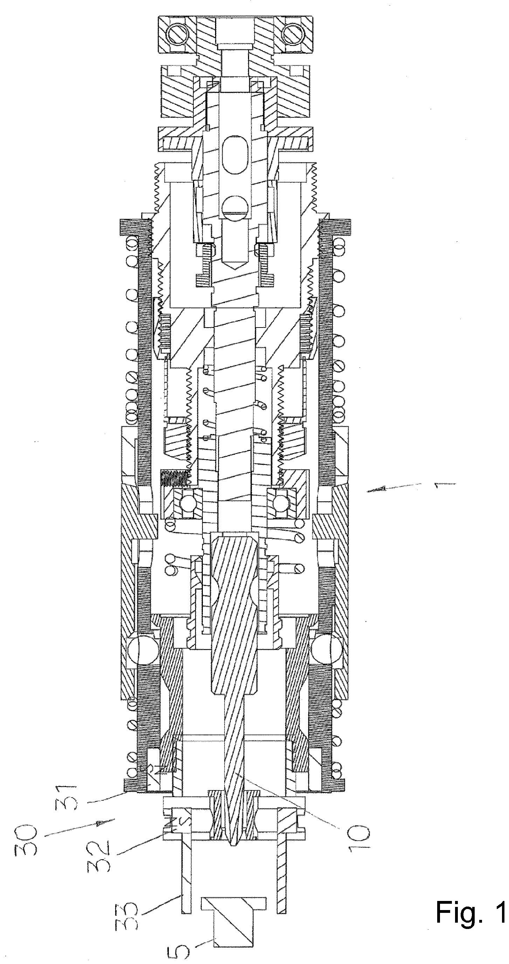

FIG. 1 depicted the structure of the magnetic levitation clamping jaw; wherein, the magnetic levitation clamping jaw 30, bonded on the screwdriver bit 10 of the automatic screwdriver 1, at least includes: a first magnet 31, configured on the periphery of the screwdriver bit 10, which will have synchronous displacement when the outer shell is pressed down to provide a magnetic repulsion force, and be reset when the outer shell is released; a second magnet 32, configured between the first magnet 31 and the screwdriver bit 10 without contacting each other, which will be pushed closer to the screwdriver bit 10 along with the displacement of the first magnet 31 under the repulsion force as like poles repel, and be reset when the screwdriver bit 10 has locked the screw 5; and a chuck 33, bonded with the second magnet 32 to have a magnetic attraction force, and which will form a tightened or released condition along with the displacement of the second magnet 32, so as to magnetically clamp and release the screw 5 for convenient locking operations.

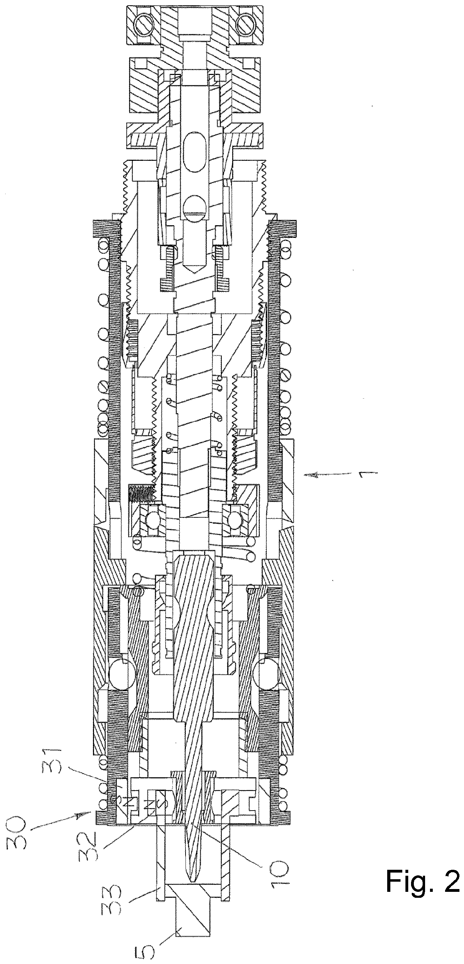

In implementation of the above design, when the automatic screwdriver 1 and robot (or robotic arm) are combined together for screw-locking operations, the working principle is as depicted in FIG. 2, when the outer shell is pressed down and the magnetic levitation clamping jaw 30 has a displacement, this section of stroke simultaneously includes: causing the first magnet 31 of the magnetic levitation clamping jaw 30 to move to the position adjacent to the second magnet 32, and to push the second magnet 32 to enable the chuck 33 to absorb and clamp the screw 5; when the screwdriver bit 10 moves downward to contact and hold the screw 5 for locking, it will push apart and release the second magnet 32, and meanwhile reset the outer shell, and also reset the first magnet 31 of the magnetic levitation clamping jaw 30, so that the screwdriver bit 10 can stretch out to tightly push the screw 5 to complete the locking.

To summarize, to meet the need for precise assembly by big manufacturers, the present invention developed a low-cost peripheral module for automatic screwdrivers dedicated to robots (or robotic arms), wherein the magnetic levitation clamping jaw is capable of screw-clamping operations or dual functions of magnetic absorption and clamping through a pneumatic controller to input high-pressure gas to push magnetic attraction or repulsion, and releasing the screw during gas exhaust through the control of an electromagnet. After clamping the screw, the automatic screwdriver can directly conduct the locking action. Such a method is different from the traditional or current automatic assembly equipment of 3 axes or less, and can substantially reduce the number of peripheral modules to cut production cost. Also, in implementation, the present invention is capable of locking screws of various sizes. It is truly a good solution to meet the need of the coming Industry 4.0 era.

## Claims

1. Magnetic levitation clamping jaw (30) for being configured on the front end of a screwdriver bit (10) of an automatic screwdriver (1), said magnetic levitation clamping jaw (30) at least comprises:
a first magnet (31), configured on the periphery of the screwdriver bit (10), which will have synchronous displacement when an outer shell is pressed down in a direction in which the screwdriver bit (10) is pointing to provide a magnetic repulsion force, and be reset when the outer shell is released;
a second magnet (32), configured between the first magnet (31) and the screwdriver bit (10) without contacting each other, which will be pushed closer to the screwdriver bit (10) along with the displacement of the first magnet (31) under the repulsion force as like poles repel, and be reset when the screwdriver bit (10) has locked the screw; and
a chuck (33), bonded with the second magnet (32) to have a magnetic attraction force, and which will form a tightened or released condition along with the displacement of the second magnet (32), so as to magnetically clamp and release the screw.

2. Magnetic levitation clamping jaw (30) as claimed in claim 1, wherein the second magnet (32) and the chuck (33) are an integrated structure.

## Patentansprüche

1. Eine Magnetschwebeklemmbacke (30) zur Anordnung an dem vorderen Ende eines Schraubendrehereinsatzes (10) eines automatischen Schraubendrehers (1), wobei die Magnetschwebeklemmbacke (30) mindestens folgendes umfasst:
einen ersten Magneten (31), der an der Peripherie des Schraubendrehereinsatzes (10) angeordnet ist, der eine synchrone Verschiebung aufweist, wenn eine äußere Hülle in eine Richtung nach unten gedrückt wird, in die der Schraubendrehereinsatz (10) zeigt, um eine magnetische Abstoßungskraft bereitzustellen und zurückgesetzt wird, wenn die äußere Hülle freigegeben wird;
einen zweiten Magneten (32), der zwischen dem ersten Magneten (31) und dem Schraubendrehereinsatz (10) ohne Berührung angeordnet ist, der zusammen mit der Verschiebung des ersten Magneten (31) unter der Abstoßungskraft näher an den Schraubendreher (1) gedrückt wird, da sich gleiche Pole abstoßen und der zurückgesetzt wird, wenn der Schraubendrehereinsatz (10) die Schraube verriegelt hat;
eine Spannvorrichtung (33), die mit dem zweiten Magneten (32) verbunden ist, um eine magnetische Anziehungskraft auszuüben, und die zusammen mit der Verschiebung des zweiten Magneten (32) einen gespannten oder gelösten Zustand bildet, um so die Schraube magnetisch festzuklemmen oder freizugeben.

2. Eine Magnetschwebeklemmbacke (30) gemäß Anspruch 1, wobei der zweite Magnet (32) und die Spannvorrichtung (33) eine ganzheitliche Konstruktion bilden.

## Revendications

1. Mâchoire de serrage à lévitation magnétique (30) à configurer sur l'extrémité avant d'un embout de tournevis (10) d'un tournevis automatique (1), ladite mâchoire de serrage à lévitation magnétique (30) comprenant au moins :
un premier aimant (31) configuré sur la périphérie de l'embout de tournevis (10) qui a un déplacement synchrone lorsqu'une coque extérieure est enfoncée dans une direction dans laquelle l'embout de tournevis (10) pointe pour fournir une force de répulsion magnétique et revient dans son état initial lorsque la coque extérieure est relâchée ;
un second aimant (32) configuré entre le premier aimant (31) et l'embout de tournevis (10) sans contact avec eux qui est poussé plus près de l'embout de tournevis (10) conjointement avec le déplacement du premier aimant (31) sous l'effet de la force de répulsion tout comme des pôles identiques se repoussent et revient à l'état initial lorsque l'embout de tournevis (10) a verrouillé la vis ; et
un mandrin (33), collé au second aimant (32) pour avoir une force d'attraction magnétique et qui forme un état serré ou relâché conjointement avec le déplacement du second aimant (32), de façon à serrer et relâcher magnétiquement la vis.

2. Mâchoire de serrage à lévitation magnétique (30) selon la revendication 1, dans laquelle le second aimant (32) et le mandrin (33) forment une structure intégrée.
